# FASCICULE DE BREVET EUROPEEN

(11) **EP 0 556 525 B1**
(45) Date de publication et mention de la délivrance du brevet: **10.04.1996**
(21) Numéro de dépôt: 92403589.2
(22) Date de dépôt: 30.12.1992
(51) Int. Cl.: C04B 28/26, C09K 17/00

(54) **Compositions aqueuses de silicate de sodium, procédé de réparation et application pour la consolidation des sols**
Wässrige Zusammensetzungen aus Sodiumsilikat, Verfahren zur Verteilung und deren Verwendung zur Verfestigung von Boden
Aqueous sodium silicate compositions, method of distribution and application for consolidating soil

(30) Priorité: 17.01.1992 FR 9200469
(43) Date de publication de la demande: 25.08.1993
(73) Titulaire: SOCIETE FRANCAISE HOECHST Société anonyme dite:, F-92800 Puteaux (FR)
(72) Inventeur: Soreau, Michel, F-92300 Levallois-Perret (FR)
(74) Mandataire: Rinuy, Santarelli

(56) Documents cités:
- EP-A- 0 213 030
- FR-A- 1 166 581
- US-A- 1 582 117
- DATABASE WPIL, section Ch, semaine 8230, Derwent Publications Ltd, Londres, GB; Class L02, AN= 82-62832E
- DATABASE WPIL, section Ch, semaine 8611, Derwent Publications Ltd, Londres, GB; class E19, AN=86-073078;

## Description

La présente invention concerne des compositions aqueuses de silicate de sodium, leur procédé de préparation et leur application pour la consolidation des sols.

Dans les procédés connus de consolidation ou d'étanchement des sols, on utilise couramment des solutions aqueuses de silicate de sodium associées à un durcisseur. On sait que les durcisseurs de nature minérale tels que l'hydrogènocarbonate de sodium et l'aluminate de sodium fournissent des gels mous, destinés préférentiellement à l'étanchement des sols et que les durcisseurs de nature organique tels que le glyoxal ou certains esters d'acides carboxyliques aisément hydrolysables, conduisent à des gels durs destinés à la consolidation des sols. Parmi ces derniers durcisseurs, pour des motifs écologiques, on préfère le glyoxal qui se dégrade en libérant des composés peu polluants pour l'environnement.

Pour certaines applications, notamment pour les sols très fins et pour lesquels on souhaite obtenir une résistance mécanique importante avec la possibilité de pouvoir réguler facilement le temps de prise, on recherche des compositions aisément injectables, présentant un temps de prise réglable à la demande et donnant des gels à forte résistance mécanique.

Pour ce faire, on a proposé des compositions contenant, soit des solutions aqueuses très alcalines de silicate de sodium associées à du carbonate de calcium finement broyé (demande de brevet français N° 2585698 et demandes de brevet japonais N° 58(63)-77989 et 64(89)-176262) , soit des solutions de silicate de sodium associées à un durcisseur organique et à un coulis (slurry) aqueux d'un matériau pulvérulent dont les particules ont un diamètre moyen de 100 à 500 µm, (demande de brevet japonais N° 55(80)-21794), soit enfin des coulis à base de silicate de sodium, d'hydrogénocarbonate de sodium et de carbonate de calcium (brevet tchèque N° 227.715). Mais ces solutions, soit libèrent des quantités excessives de produits alcalins, soit sont très difficilement injectables dans les sols fins, soit enfin fournissent des gels ne présentant pas une résistance mécanique suffisante.

Afin de répondre à la demande du marché, la demanderesse a découvert une nouvelle composition aqueuse à base de silicate de sodium destinée à la consolidation des sols donnant une résistance mécanique élevée, facilement injectable dans les sols fins, présentant une faible synérèse peu polluante et dont le temps de prise est aisément réglable.

La composition aqueuse selon la présente invention est à base de silicate de sodium et de glyoxal et elle est caractérisée par le fait qu'elle contient du carbonate de calcium granulaire dont les particules ont un diamètre moyen inférieur à 10 µm.

L'invention a plus particulièrement pour objet les compositions telles que définies ci-dessus, caractérisées par le fait que les particules de carbonate de calcium ont un diamètre moyen inférieur ou égal à 3,5 µm. Parmi ces dernières compositions l'invention a notamment pour objet celles dont au moins 90 % en poids des particules de carbonate de calcium ont un diamètre moyen inférieur ou égal à 2 µm.

Parmi les compositions ci-dessus, on peut citer les compositions aqueuses suivantes contenant pondéralement par litre :
- de 50 à 250 g de silicate de sodium dont le rapport molaire SiO₂/Na₂O est supérieur ou égal à 3,
- de 5 à 50 g de glyoxal,
- de 50 à 1200 g de carbonate de calcium granulaire dont le diamètre moyen des particules est inférieur à 10 µm.

Parmi ces dernières compositions, on peut citer plus particulièrement les compositions aqueuses suivantes contenant pondéralement par litre :
- de 80 à 180 g de silicate de sodium dont le rapport molaire SiO₂/Na₂O est supérieur à 3.
- de 10 à 40 g de glyoxal,
- de 100 à 1000 g de carbonate de calcium finement broyé dont le diamètre moyen des particules est de préférence inférieur ou égal à 3,5 µm.

La composition selon la présente invention se présente sous la forme d'un sol aqueux, facilement injectable même dans les sols très fins. Son temps de prise est aisément réglable, soit en modifiant son taux de glyoxal, soit en lui introduisant une solution aqueuse d'un accélérateur de prise connu tel que le chlorure de calcium. Les quantités d'accélérateur de prise utilisées par litre de composition peuvent varier de 0 à 30 g.

Le silicate de sodium utilisé pour préparer les compositions selon l'invention est avantageusement sous forme d'une solution aqueuse commerciale de silicate de sodium de rapport molaire SiO₂/Na₂O supérieur ou égal à 3 et de préférence environ 3,45. Parmi ces dernières solutions, on préférera les solutions de densité supérieure à 35 ° Baumé, notamment de densité de 35 à 41° Be, soit une densité supérieure à 1,318 notamment comprise entre 1,318 et 1,394. Le glyoxal utilisé est avantageusement sous forme d'une solution aqueuse commerciale à 40 % en poids, présentant une densité de 1,27. Le carbonate de calcium finement broyé est avantageusement l'HYDROCARB^{R} 90 vendu par la société OMYA - 75725 PARIS CEDEX 15. Ce produit contient au moins 98 % de carbonate de calcium sous forme de particules discrètes d'un diamètre moyen inférieur ou égal à 3,5 µm et contenant au moins 90 % en poids de carbonate de calcium sous forme de particules d'un diamètre moyen inférieur ou égal à 2 µm.

La composition selon la présente invention est très facilement préparée par simple mélange de ses constituants à la température ambiante. Avantageusement, on mélange sous agitation, à la température ambiante, les quantités nécessaires d'eau et de solution aqueuse de silicate de sodium, puis dans cette solution agitée on introduit la quantité désirée de glyoxal en solution aqueuse, et ensuite la quantité désirée d'une suspension aqueuse de carbonate de calcium de préférence préparée extemporanément en agitant vigoureusement du carbonate de calcium finement broyé dans de l'eau, en présence éventuellement d'une très faible quantité d'un agent dispersant connu.

La composition selon la présente invention, présente d'étonnantes propriétés applicatives dans le domaine de la consolidation des sols, notamment pour la consolidation de sols très fins. En effet, elle permet d'atteindre des résistances élevées. De plus, elle conduit à des gels présentant une synérèse faible et ses eaux de délavage sont peu polluantes : leur DCO (demande chimique en oxygène) est inférieure à 2g/l d'oxygène. Même après délavage prolongé, les gels obtenus par l'emploi de la composition selon l'invention conservent encore une résistance à la compression très nettement supérieure à celle obtenue par l'utilisation des compositions classiques exemptes de carbonate de calcium finement broyé.

C'est pourquoi la présente demande a enfin pour objet l'application des compositions définies ci-dessus pour la consolidation des sols.

La résistance à la compression des gels obtenus par l'emploi de la composition selon l'invention est déterminée de la manière suivante :
- dans un tube en plastique rigide et transparent, de diamètre 40 mm et 1200 mm de long, obturé à son extrémité inférieure, on place 1800 g de sable de Fontainebleau calibré, de densité apparente de 1,5, de surface spécifique de 145 cm2/g et de granulométrie comprise entre 75 et 300 µm. On tasse ensuite le sable de manière à obtenir une densité apparente de 1,7, soit une hauteur de sable dans la colonne placée verticalement de 840 ± 5 mm. On injecte ensuite à la base de cette colonne verticale et maintenue à la température ambiante, sous une pression inférieure à 3 bar, environ 500 à 600 ml de la composition à tester de manière que la composition atteigne le haut de la colonne préalablement obturée. La colonne de sable injectée est ensuite abandonnée à la température ambiante, à l'abri de l'air, pendant une durée déterminée, puis elle est découpée dans le sens de la longueur en 10 éprouvettes de 8 cm de long et la résistance à la compression de chaque éprouvette est mesurée avec un appareil LHOMAGRY dont la vitesse d'écrasement est de 10 mm/min, et qui permet de connaître la charge à la rupture de l'éprouvette.

Pour le calcul de la résistance à l'écrasement, on ne tient pas compte ni des deux éprouvettes découpées aux extrémités, ni des résultats obtenus sur des éprouvettes ne présentant pas une cassure franche, ni enfin des résultats s'écartant de plus de 20 % de la valeur moyenne.

La résistance à l'écrasement, ou résistance à la compression, désignée R_{c}, est le rapport de la charge à la rupture exprimée en Newton sur la section de l'éprouvette exprimée en mètre carré. Elle est exprimée en Pascals.

Pour effectuer les essais de délavage, on prépare comme précédemment, 10 éprouvettes de sable injectées avec la composition à tester, on élimine ensuite les deux éprouvettes terminales, puis après avoir pesé exactement les 8 éprouvettes résiduelles, on les abandonne verticalement à la température ambiante, dans 7,2 Kg d'eau distillée constamment agitée. Périodiquement, on prélève un échantillon de l'eau et on détermine, selon les moyens connus, son pH, son alcalinité et sa DCO. Après 72 heures d'abandon dans l'eau, les éprouvettes sont retirées, égouttées, puis séchées à température ambiante sur papier buvard. On détermine ensuite leur perte de poids et leur résistance à la compression.

Le temps de prise, t, exprimé en minutes, est déterminé à la température ambiante, en mesurant le temps nécessaire pour qu'un volume donné de la composition selon l'invention ne se déforme plus en inclinant horizontalement le récipient qui la contient. Le poids de liquide relargué lors de l'agrégation de la composition après un temps déterminé, à la température ambiante, permet de connaître la synérèse.

Les compositions décrites dans les exemples suivants ont été préparées à partir de :
- x (ml) d'une solution aqueuse de silicate de sodium, à 36° Baumé (d = 1,330) ± 1° Baumé à 20° C, contenant pondéralement 25,5 % de SiO₂, 7,6 % de Na₂O et 66,9 % d'eau, et de rapport molaire SiO₂/Na₂O = 3,45 ;
- y (ml) d'une solution aqueuse commerciale de glyoxal à 40% en poids de glyoxal et présentant à 20°C une densité d'environ 1,27 ;
- p (g) d'une solution aqueuse contenant pondéralement 77,6% de carbonate de calcium commercialisé sous la désignation HYDROCARB^{R} 90 par la Société OMYA, 75725 PARIS Cedex 15 ;
- z (ml) d'une solution aqueuse contenant pondéralement 10% de chlorure de calcium et présentant à 20°C une densité d'environ 1,08 ;
- w (g) d'une solution aqueuse d'aluminate de sodium contenant pondéralement 20% d'Al₂O₃ et 15,2% de Na₂O ;
- m (g) d'hydrogénocarbonate de sodium pur anhydre.

Toutes les compositions sont ensuite complétées à 1 litre avec de l'eau de ville.

Dans le tableau I, on mentionne diverses formulations de compositions selon la présente invention. Toutes ces compositions ont un volume total, V, de 1000 ml et elles contiennent pondéralement par litre, a (g) de silicate de sodium anhydre de rapport molaire SiO₂/Na₂O = 3,35 , b (g) de glyoxal pur, c (g) de carbonate de calcium anhydre et d (g) de chlorure de calcium anhydre. Leur temps de prise, t, est exprimé en minutes, et leur résistance à la compression, R_{c}, après 8 jours, 28 jours et 92 jours est exprimée en 100 KPa.

Dans le tableau II, on mentionne diverses formulations de comparaison et dans le tableau III on donne les résultats de délavage obtenus avec une composition selon la présente invention en comparaison avec une composition connue.

On constate à l'examen des tableaux I à III que :
- l'introduction de carbonate de calcium dans une solution aqueuse de silicate de sodium et de glyoxal ne modifie pratiquement pas son temps de prise.
- l'introduction de carbonate de calcium dans une solution aqueuse de silicate de sodium contenant un durcisseur connu tel que l'hydrogènocarbonate de sodium, l'aluminate de sodium ou même l'acétate d'éthyle modifie fortement son temps de prise.
- la présence de carbonate de calcium finement broyé dans une solution aqueuse de silicate de sodium et de glyoxal augmente de façon très importante la résistance à la compression des sables traités avec cette composition, ce qui permet d'obtenir la résistance souhaitée en utilisant des quantités nettement moindres de silicate de sodium et de glyoxal que celles exigées pour des compositions exemptes de carbonate de calcium. Or le remplacement d'une quantité importante de silicate de sodium et de glyoxal par du carbonate de calcium est d'un grand intérêt économique et écologique.

**TABLEAU I**

| Formulation des compositions selon la présente invention, leur temps de prise et leur résistance à la compression. | | | | | | | | | | | | | |
|---|---|---|---|---|---|---|---|---|---|---|---|---|---|
| | **x(ml)** | **y(ml)** | **p(g)** | **z(ml)** | **V(ml)** | **a** | **b** | **c** | **d** | **t(min)** | **Rc (100 KPa)** | | |
| | | | | | | | | | | | **8j** | **28j** | **92j** |
| **1** | 300 | 40 | 258 | 0 | 1000 | | 20 | 200 | 0 | 86 | 6 | | |
| **2** | 300 | 40 | 516 | 0 | 1000 | 132 | 20 | 400 | 0 | 83 | 10,4 | 10,3 | 10 |
| **3** | 300 | 50 | 129 | 0 | 1000 | 132 | 25 | 100 | 0 | 59 | 4,7 | 5,5 | |
| **4** | 300 | 50 | 258 | 0 | 1000 | 132 | 25 | 200 | 0 | 60 | 4,7 | 7,1 | |
| **5** | 300 | 60 | 516 | 0 | 1000 | 132 | 30 | 400 | 0 | 52 | 9,1 | 7,9 | |
| **6** | 300 | 25 | 258 | 25 | 1000 | 132 | 12,5 | 200 | 2,7 | 70 | | 4,5 | |
| **7** | 300 | 30 | 258 | 20 | 1000 | 132 | 15 | 200 | 2,2 | 74 | | 5,1 | |
| **8** | 300 | 40 | 258 | 10 | 1000 | 132 | 20 | 200 | 1,1 | 60 | 6,5 | 8,7 | |
| **9** | 400 | 60 | 516 | 0 | 1000 | 176 | 30 | 400 | 0 | 55 | | 17,2 | |
| **10** | 400 | 80 | 258 | 0 | 1000 | 176 | 40 | 200 | 0 | 45 | 10,4 | 9,6 | |
| **11** | 400 | 80 | 516 | 0 | 1000 | 176 | 40 | 400 | 0 | 45 | 16,2 | 13,3 | |
| **12** | 200 | 35 | 516 | 20 | 1000 | 88 | 17,5 | 400 | 2,2 | 60 | | 4 | 4,5 |

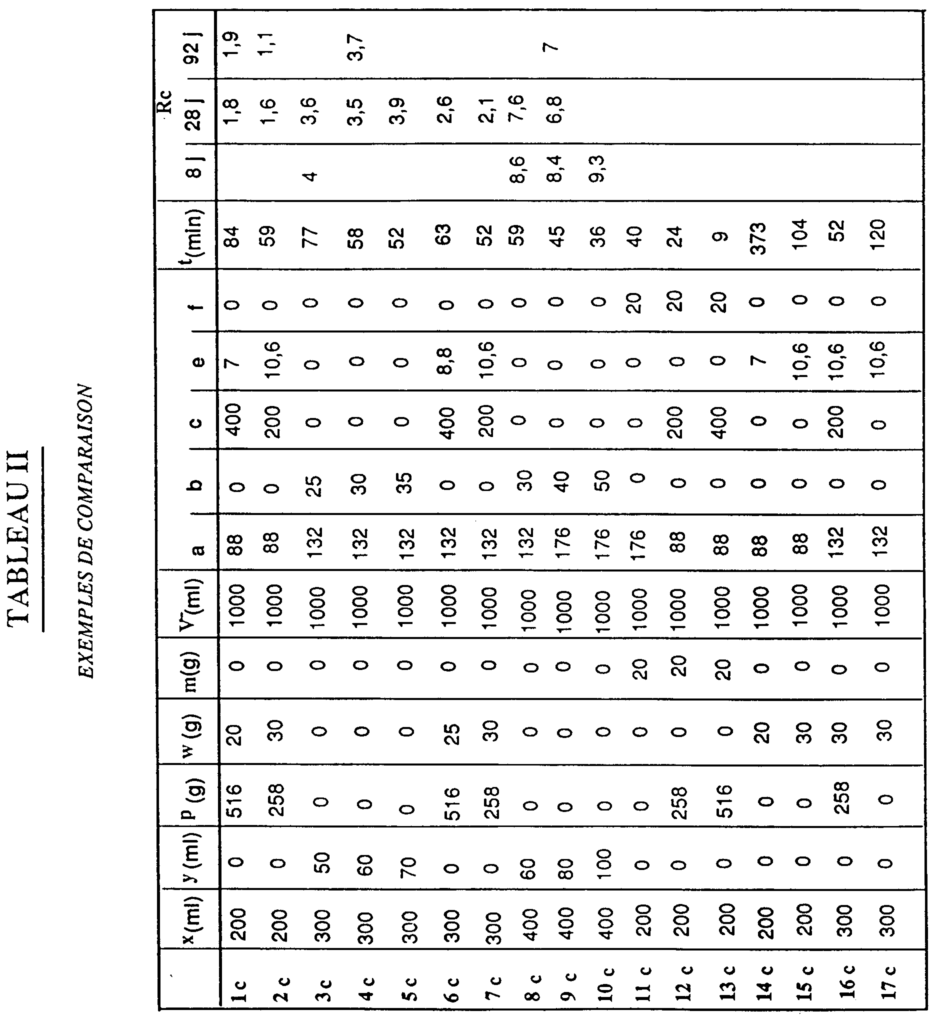

**TABLEAU III**

| ***ESSAIS DE DELAVAGE*** | | |
|---|---|---|
| **Composition** | **Ex 9C** | **Ex 2** |
| Rc après 8 jours (100 KPa) | 8,4 | 10,4 |
| Temps de prise , t (min) | 45 | 83 |
| Pertes de poids des éprouvettes | 1,15 % | 1,11 % |
| Résistance à la compression , Rc, après 8 jours de stockage et 3 jours de délavage (100 KPa) | 3,6 | 6,8 |

| Contrôle des eaux de délavage | | |
|---|---|---|
| pH | 10,1 | 10,1 |
| DCO (gO₂/l) * | 1,6 | 0,9 |

| | | |
|---|---|---|
| * déterminée selon norme AFNOR NF T 90 - 101(09/1971) | | |

## Revendications

1. Composition aqueuse destinée à la consolidation des sols à base de silicate de sodium et de glyoxal caractérisée par le fait qu'elle contient du carbonate de calcium granulaire dont les particules ont un diamètre moyen inférieur à 10 µm.

2. Composition selon la revendication 1, caractérisée par le fait que les particules de carbonates de calcium ont un diamètre moyen inférieur ou égal à 3,5µm.

3. Composition selon la revendication 2 caractérisée par le fait qu'au moins 90 % en poids des particules de carbonate de calcium ont un diamètre moyen inférieur ou égal à 2 µm.

4. Composition selon l'une quelconque des revendications 1 à 3 caractérisée par le fait qu'elle contient pondéralement par litre de composition :
- de 50 à 250 g de silicate de sodium dont le rapport molaire SiO₂/Na₂O est supérieur ou égal à 3,
- de 5 à 50 g de glyoxal,
- de 50 à 1200 g de carbonate de calcium.

5. Composition selon la revendication 4 caractérisée par le fait qu'elle contient pondéralement par litre de composition :
- de 80 à 180 g de silicate de sodium dont le rapport molaire SiO₂/Na₂O est supérieur ou égal à 3,
- de 10 à 40 g de glyoxal,
- de 100 à 1000 g de carbonate de calcium.

6. Composition selon l'une quelconque des revendications 4 et 5 caractérisée par le fait que le silicate de sodium présente un rapport molaire SiO₂/Na₂O environ 3,45.

7. Composition selon l'une quelconque des revendications 4 et 5 caractérisée par le fait que le silicate de sodium est utilisé sous la forme d'une solution commerciale dont la densité exprimée en degrés Baumé à 20°C est supérieure à 35, soit une densité supérieure à 1,318.

8. Procédé de préparation d'une composition aqueuse telle que définie à l'une quelconque des revendications 1 à 6, caractérisé par le fait que l'on mélange les différents constituants pour obtenir la composition désirée.

9. Procédé selon la revendication 8, caractérisé par le fait que l'on mélange sous agitation la quantité nécessaire d'eau et de solution aqueuse de silicate de sodium puis introduit la quantité désirée de solution aqueuse de glyoxal et enfin introduit la quantité désirée d'une suspension aqueuse de carbonate de calcium.

10. Application de la composition selon l'une quelconque des revendications 1 à 6 pour la consolidation des sols.

## Claims

1. Aqueous composition intended for the consolidation of ground, based on sodium silicate and glyoxal, characterised by the fact that it contains granular calcium carbonate whose particles have a mean diameter of less than 10 µm.

2. Composition according to Claim 1, characterised by the fact that the calcium carbonate particles have a mean diameter less than or equal to 3.5 µm.

3. Composition according to Claim 2, characterised by the fact that at least 90% by weight of the calcium carbonate particles have a mean diameter less than or equal to 2 µm.

4. Composition according to any one of Claims 1 to 3, characterised by the fact that it contains, by weight, per litre of composition:
- 50 to 250 g of sodium silicate whose SiO₂/Na₂O molar ratio is greater than or equal to 3,
- 5 to 50 g of glyoxal,
- 50 to 1200 g of calcium carbonate.

5. Composition according to Claim 4, characterised by the fact that it contains, by weight, per litre of composition:
- 80 to 180 g of sodium silicate whose SiO₂/Na₂O molar ratio is greater than or equal to 3,
- 10 to 40 g of glyoxal,
- 100 to 1000 g of calcium carbonate.

6. Composition according to either one of Claims 4 and 5, characterised by the fact that the sodium silicate has an SiO₂/Na₂O molar ratio of approximately 3.45.

7. Composition according to either one of Claims 4 and 5, characterised by the fact that the sodium silicate is used in the form of a commercial solution whose density expressed in degrees Baumé at 20°C is greater than 35, that is a density greater than 1.318.

8. Method for preparing an aqueous composition as defined in any one of Claims 1 to 6, characterised by the fact that the different constituents are mixed in order to obtain the desired composition.

9. Method according to Claim 8, characterised by the fact that the required quantity of water and aqueous solution of sodium silicate is mixed while stirring and then the desired quantity of aqueous solution of glyoxal is introduced and finally the desired quantity of an aqueous suspension of calcium carbonate is introduced.

10. Application of the composition according to any one of Claims 1 to 6 for the consolidation of ground.

## Patentansprüche

1. Zur Verfestigung von Böden bestimmte wäßrige Zusammensetzung auf der Basis von Natriumsilicat und Glyoxal, dadurch gekennzeichnet, daß sie granulöses Calciumcarbonat enthält, dessen Teilchen einen mittleren Durchmesser von weniger als 10 µm haben.

2. Zusammensetzung nach Anspruch 1, dadurch gekennzeichnet, daß die Calciumcarbonatteilchen einen mittleren Durchmesser von 3,5 µm oder weniger haben.

3. Verfahren nach Anspruch 1, dadurch gekennzeichnet, daß mindestens 90 Gew.-% der Calciumcarbonatteilchen einen mittleren Durchmesser von 2 µm oder weniger haben.

4. Zusammensetzung nach einem der Ansprüche 1 bis 3, dadurch gekennzeichnet, daß sie pro l Zusammensetzung gewichtsanalytisch enthält:
- 50 bis 250 g Natriumsilicat mit einem molaren SiO₂/Na₂O-Verhältnis von 3 oder mehr,
- 5 bis 50 g Glyoxal,
- 50 bis 1200 g Calciumcarbonat.

5. Zusammensetzung nach Anspruch 4, dadurch gekennzeichnet, daß sie pro l Zusammensetzung gewichtsanalytisch enthält:
- 80 bis 180 g Natriumsilicat mit einem molaren SiO₂/Na₂O-Verhältnis von 3 oder mehr,
- 10 bis 40 g Glyoxal,
- 100 bis 1000 g Calciumcarbcnat.

6. Zusammensetzung nach einem der Ansprüche 4 und 5, dadurch gekennzeichnet, daß das Natriumsilicat ein molares SiO₂/Na₂O-Verhältnis von etwa 3,45 aufweist.

7. Zusammensetzung nach einem der Ansprüche 4 und 5, dadurch gekennzeichnet, daß das Natriumsilicat in Form einer kommerziellen Lösung verwendet wird, deren in ° Baumé ausgedrückte Dichte bei 20°C mehr als 35 bzw. deren Dichte mehr als 1,318 beträgt.

8. Verfahren zur Herstellung einer wäßrigen Zusammensetzung gemäß Definition in einem der Ansprüche 1 bis 6, dadurch gekennzeichnet, daß man die verschiedenen Bestandteile zur Erzielung der gewünschten Zusammensetzung mischt.

9. Verfahren nach Anspruch 8, dadurch gekennzeichnet, daß man die nötige Menge an Wasser und wäßriger Natriumsilicatlösung unter Rühren mischt, dann die gewünschte Menge an wäßriger Glyoxallösung und schließlich die gewünschte Menge einer wäßrigen Calciumcarbonatsuspension einführt.

10. Verwendung der Zusammensetzung nach einem der Ansprüche 1 bis 6 zur Verfestigung von Böden.
